# EUROPEAN PATENT SPECIFICATION

(11) **EP 3 345 295 B1**
(45) Date of publication and mention of the grant of the patent: **27.10.2021**
(21) Application number: 16757249.4
(22) Date of filing: 26.08.2016
(51) Int. Cl.: H02N 1/04

(54) **ELECTRICAL POWER GENERATION DEVICE AND GENERATION METHOD**
STROMERZEUGUNGSVORRICHTUNG UND ERZEUGUNGSVERFAHREN
DISPOSITIF DE GÉNÉRATION D'ÉNERGIE ÉLECTRIQUE ET PROCÉDÉ DE GÉNÉRATION

(30) Priority: 04.09.2015 EP 15183834
(43) Date of publication of application: 11.07.2018
(73) Proprietor: Koninklijke Philips N.V., 5656 AG Eindhoven (NL)
(72) Inventor: ARULANDU, Kumar, 5656 AE Eindhoven (NL); VAN DEN ENDE, Daan Anton, 5656AE Eindhoven (NL); GERHARDT, Lutz Christian, 5656AE Eindhoven (NL); JOYE, Neil Francis, 5656AE Eindhoven (NL); JOHNSON, Mark Thomas, 5656AE Eindhoven (NL)
(74) Representative: Philips Intellectual Property & Standards
(86) International application number: PCT/EP2016/070149
(87) International publication number: WO 2017/036938

(56) References cited:
- EP-A1- 1 050 955

## Description

### FIELD OF THE INVENTION

The invention relates to a device for generating electrical power, and in particular to a device for generating electrical current by means of an energy generator adapted to convert mechanical energy into electrical energy.

### BACKGROUND OF THE INVENTION

The harvesting or conversion of small-scale sources of mechanical energy into usable forms of electrical energy is an area which has attracted significant attention in recent years, and as a technology field has undergone rapid and substantial development.

One field in particular which has been the focus of much attention is that of triboelectric energy generation. The triboelectric effect (also known as triboelectric charging) is a contact-induced electrification in which a material becomes electrically charged after it is contacted with a different material through friction. Triboelectric generation is based on converting mechanical energy into electrical energy through methods which couple the triboelectric effect with electrostatic induction. It has been proposed to make use of triboelectric generation to power wearable devices such as sensors and smartphones by capturing the otherwise wasted mechanical energy from such sources as walking, random body motions, the wind blowing, vibration or ocean waves (see, for example: Wang, Sihong, Long Lin, and Zhong Lin Wang. "Triboelectric nanogenerators as self-powered active sensors." Nano Energy 11 (2015): 436-462).

The triboelectric effect is based on a series that ranks various materials according to their tendency to gain electrons (become negatively charged) or lose electrons (become positively charged). This series is for example disclosed in A.F. Diaz and R.M. Felix-Navarro, A semi-quantitative tribo-electric series for polymeric materials: the influence of chemical structure and properties, Journal of Electrostatics 62 (2004) 277-290. The best combinations of materials to create static electricity are one from the positive charge list and one from the negative charge list (e.g. PTFE against copper, or FEP against aluminum). Rubbing glass with fur, or a comb through the hair are well-known examples from everyday life of triboelectricity.

In its simplest form, a triboelectric generator uses two sheets of such dissimilar materials, one an electron donor, the other an electron acceptor. One or more of the materials can be an insulator. Other possible materials may include semiconductor materials, for example silicon comprising a native oxide layer. When the materials are brought into contact, electrons are exchanged from one material to the other, inducing a reciprocal charge on the two materials. This is the triboelectric effect.

If the sheets are then separated, each sheet holds an electrical charge (of differing polarity), isolated by the gap between them, and an electric potential is built up. If electrodes are disposed on to the two material surfaces and an electrical load connected between them, any further displacement of the sheets, either laterally or perpendicularly, will induce in response a current flow between the two electrodes. This is simply an example of electrostatic induction. As the distance between the respective charge centers of the two plates is increased, so the attractive electric field between the two, across the gap, weakens, resulting in an increased potential difference between the two outer electrodes, as electrical attraction of charge via the load begins to overcome the electrostatic attractive force across the gap.

In this way, triboelectric generators convert mechanical energy into electrical energy through a coupling between two main physical mechanisms: contact electrification (tribo-charging) and electrostatic induction.

By cyclically increasing and decreasing the mutual separation between the charge centers of the plates, so current can be induced to flow back and forth between the plates in response, thereby generating an alternating current across the load.

Recently, an emerging material technology for power generation (energy harvesting) and power conversion has been developed which makes use of this effect, as disclosed in Wang, Z. L., "Triboelectric nanogenerators as new energy technology for self-powered systems and as active mechanical and chemical sensors." ACS nano 7.11 (2013): 9533-9557. Based on this effect several device configurations have been developed of triboelectric generators ("TEG").

Since their first reporting in 2012, the output power density of TEGs has been greatly improved. The volume power density may reach more than 400 kilowatts per cubic meter, and an efficiency of ∼60% has been demonstrated (ibid.). In addition to high output performance, TEG technology carries numerous other advantages, such as low production cost, high reliability and robustness, and low environmental impact.

The TEG may be used as an electrical power generator, i.e. energy harvesting from, for example, vibration, wind, water, random body motions or even conversion of mechanically available power into electricity. The generated voltage is a power signal.

TEGs may broadly be divided into four main operational classes.

A first mode of operation is a vertical contact-separation mode, in which two or more plates are cyclically brought into or out of contact by an applied force. This may be used in shoes, for example, where the pressure exerted by a user as they step is utilized to bring the plates into contact. One example of such a device has been described in the article "Integrated Multilayered Triboelectric Nanogenerator for Harvesting Biomechanical Energy from Human Motions" of Peng Bai et. al. in ACS Nano 2013 7(4), pp3713-3719. Here, the device comprises a multiple layer structure formed on a zig-zag shaped substrate. The device operates based on surface charge transfer due to contact electrification. When a pressure is applied to the structure, the zig-zag shape is compressed to create contact between the different layers, and the contact is released when the pressure is released. The energy harvested might be for example used for charging of mobile portable devices.

A second mode of operation is a linear sliding mode, wherein plates are induced to slide laterally with respect to one another in order to change the area of overlap between them. A potential difference is induced across the plates, having an instantaneous magnitude in proportion to the rate of change of the total overlapping area. By repeatedly bringing plates into and out of mutual overlap with one another, an alternating current may be established across a load connected between the plates.

One particular subset of linear sliding mode TEGs which have been developed are rotational disk TEGs which can be operated in both a contact (i.e., continuous tribocharging and electrostatic induction) or a non-contact mode (i.e., only electrostatic induction after initial contact electrification). Rotational disk TEGs typically consist of at least one rotor and one stator each formed as a set of spaced circle sectors (segments). The sectors overlap and then separate as the two disks rotate relative to each other. As described above, a current may be induced between two laterally sliding - oppositely charged - layers, with a magnitude in proportion to the rate of change of the area of overlap. As each consecutively spaced sector of the rotor comes into and then out of overlap with a given stator sector, so a charge is induced between the two sector plates. When a load is present, this means current will flow initially in a first direction, as the plates increase in overlap, and then in the opposite direction as the plates decrease in overlap.

A design which enables energy to be harvested from sliding motions is disclosed in the article "Freestanding Triboelectric-Layer-Based Nanogenerators for Harvesting Energy from a Moving Object of Human Motion in Contact and Non-Contact Modes" in Adv. Mater. 2014, 26, 2818-2824. A freestanding movable layer slides between a pair of static electrodes. The movable layer may be arranged not to make contact with the static electrodes (i.e. at small spacing above the static electrodes) or it may make sliding contact.

A third mode of operation is a single electrode mode in which one surface is for example grounded - for example, a floor road - and a load is connected between this first surface and ground (see for example Yang, Ya, et al. "Single-electrode-based sliding triboelectric nanogenerator for self-powered displacement vector sensor system.", ACS nano 7.8 (2013): 7342-7351). The second surface - not electrically connected to the first - is brought into contact with the first surface and tribocharges it. As the second surface is then moved away from the first, the excess charge in the first surface is driven to ground, providing a current across the load. Hence only a single electrode (on a single layer) is used in this mode of operation to provide an output current.

A fourth mode of operation is a freestanding triboelectric layer mode, which is designed for harvesting energy from an arbitrary moving object to which no electrical connections are made. This object may be a passing car, passing train, or a shoe, for example. (Again, see "Triboelectric nanogenerators as new energy technology for self-powered systems and as active mechanical and chemical sensors." ACS nano 7.11 (2013): 9533-9557).

There are still further designs of triboelectric generator, such as a double-arch shaped configuration based on contact electrification. A pressure causes the arches to close to make contact between the arch layers, and the arches return to the open shape when the pressure is released. A triboelectric generator has also been proposed which is formed as a harmonic resonator for capturing energy from ambient vibrations.

State of the art triboelectric generators, as for example presented by the Georgia Institute of Technology, are presently able to demonstrate only low power outputs in the range of a few milliwatts. In particular, the typical output power of a TEG currently consists of a voltage level in the range of a few hundreds of volts and a sub-milliamp current level, for example of tens to hundreds of microamps. Although triboelectric generation is attractive, it becomes challenging when the output power needs to be converted for practical applications.

In addition, the output of known TEGs generally consists of a high frequency regularly repeating pattern of high voltage pulses. This is a result of the periodic layout of electrodes in the known devices, in combination with a relatively high rate of motion.

Such high voltage and often high frequency outputs are unsuitable as a direct power supply for many of the most common practical applications, and often require conversion by means of one or more transformer or amplifier circuits before they can be used in powering components. For example, the output needs to be converted into lower voltages and higher current levels e.g.: in the range of 5V and few milliamps. Prior to the power conversion stage, the energy is usually stored in a storage element such as a load capacitor.

A commonly understood aspect of power generators is that the maximum output power can be optimized by matching this output capacitor (or more generally the output impedance) with the internal impedance of the generator. It is well known that the selection of load capacitor is very important for an application. For example, this is described in Niu et al., "Optimization of Triboelectric Nano generator Charging Systems for Efficient Energy Harvesting and Storage", IEEE Transactions on Electron Devices, 62, 2, (2015). However, such impedance matching becomes impractical for a power generator which delivers a widely fluctuating output signal.

There are other varieties of generator (e.g. electret based) operating on similar principles, but not specifically utilizing the triboelectric effect. These may also suffer from this same drawback of providing high voltage outputs unsuitable for direct driving of common micro controller type of components. Such generators might include in general any electrical power generator which operates through the relative motion of two or more charged elements, including for example induction-based generators which generate electrical power through electrostatic induction but which do not operate through tribo-charging of mutually moving elements. Piezoelectric energy harvesting arrangements are a further example. EP1050955 discloses a method and apparatus that provide autonomous power supply by converting energy of sources of a non-electrical nature into the electric energy using charge generators. For such apparatuses, as charge generators can be used piezoelectric elements, triboelectric elements, as well as radioactive sources of charged particles that do not require periodic replacement or re-charging - in contradistinction to the conventional sources of power supply, galvanic batteries. Charge generator, when activated, produces a portion of electric charges q having a high electric potential Uin, which portion is applied to the input of charge energy converter. The function of the converter is to increase the initial value of charges q up to value of Q, with simultaneous reduction of their potential to Uout value, which less than Uin. For the purpose to store charges Q obtained as a result of the conversion, which charges Q are needed for the electronic systems power supply, electric charge storage is positioned at the output of the apparatus.

There is therefore a need for an improved energy transfer from a triboelectric generator or other high voltage energy harvesting technology to the load capacitor or energy storage capacitor.

### SUMMARY OF THE INVENTION

The invention is defined by the claims.

According to an aspect of the invention, there is provided a device for generating electrical power, comprising:
an electrical power generator configured to generate an electrical output current using charge induction; and
a load capacitor for storing charge in response to the electrical output current,
wherein the load capacitor has a capacitance which increases with the voltage across the load capacitor.

The effect of the increasing capacitance is to limit the output voltage generated but at the same time enable a rapid initial increase in voltage in response to current flow when the voltage is initially low. This device thus improves charging efficiency. It is of particular interest when energy generation involves multiple bursts of activation of the electrical power generator.

The load capacitor is for example based on a non-linear dielectric material, in order to achieve the desired voltage dependency of the capacitance. The material may also be less sensitive to load capacitor matching, for example one design may cover a wider range of applications. In particular, by having a flatter voltage on the load capacitor, impedance matching is improved.

In power generating applications which produce a high voltage but only a low current, the arrangement reduces the complexity of the required power conversion circuitry.

A rectifier may be provided for rectifying the electrical output current. The rectifier may be a full bridge or single bridge rectifier, for example.

At a maximum output voltage of the electrical power generator, the capacitance of the load capacitor may be at least 50% higher than at 10% of the maximum output voltage. This means the voltage profile (in response to a constant injected current) is flattened significantly compared to a linear ramp which would result from a constant capacitance. For a maximum output voltage of the electrical power generator, the capacitance of the load capacitor may be at least double, or more than three times that at 10% of the maximum output voltage. By way of example, over the full operating range of the capacitor, the capacitance of the load capacitor may vary by a factor in the range of 3 to 5.

The electrical power generator may comprise a first set of generating elements and a second set of generating elements, at least the first set of which is configured to hold an electrical charge, and which are configured to be movable with respect to one another to generate the electrical output current. Such an arrangement may operate based on electrostatic charging.

In a first set of examples, the electrical power generator comprises a triboelectric generator. It may take various forms. In general, a triboelectric generator is characterized in that the relative charge between the first and second sets of generating elements is established and maintained by means of intermittent periods of physical contact, during which reciprocal charge is built up on the elements of each set (a process of tribo-charging). The generating elements are composed of materials which are triboelectrically active (which form part of the 'triboelectric series').

Alternative examples may make use of an induction generator or an electret generator.

The electrical power generator is preferably operable in a contact mode and a non-contact mode, with a cyclic operation between the contact and non-contact modes. This cyclic operation gives rise to an output voltage which fluctuates frequently between a zero value and maximum positive and negative values. This type of voltage profile in particular benefits from a voltage flattening as achieved by the non-linear load capacitor.

Some types of triboelectric generator are indeed characterized by these short voltage pulses, such as vertical contact-separation mode devices and tapping mode devices. However, the invention is of particular interest for any triboelectric or other charge induction generator undergoing random or periodic cyclic loading events, and operating in a contact or non-contact mode.

The load capacitor for example comprises a material having an increasing permittivity with increased applied electric field.

Some examples for this material are:
an electroactive polymer material; or
a relaxor ferroelectric material; or
a piezoelectric ceramic; or
a composite polymer material.

Examples in accordance with another aspect of the invention provide a method for generating electrical power, comprising:
generating an electrical output current using charge induction using an electrical power generator; and
storing charge in response to the electrical output current on a load capacitor,
wherein the load capacitor has a capacitance which increases with the voltage across the load capacitor.

• This variable capacitance, based on a non-linear dielectric, simplifies the processing of the output power of the generator.

### BRIEF DESCRIPTION OF THE DRAWINGS

Examples of the invention will now be described in detail with reference to the accompanying drawings, in which:
Figure 1 shows a device for generating electrical power, in schematic form;
Figure 2 shows the circuit elements of the device of Figure 1;
Figure 3 shows the effect of using a load capacitor with a capacitance which varies in dependence on voltage;
Figure 4 shows the capacitance-voltage characteristic for a first example of load capacitor;
Figure 5 shows the capacitance-voltage characteristic for a second example of load capacitor; and
Figure 6 shows the capacitance-voltage characteristic for a third example of load capacitor.

### DETAILED DESCRIPTION OF THE EMBODIMENTS

The invention provides a device (and method) for generating electrical power, comprising an electrical power generator configured to generate an electrical output current using charge induction. A load capacitor is used for storing charge in response to the rectified electrical output current, wherein the load capacitor has a capacitance which increases with voltage. This means the voltage stored on the load capacitor becomes flatter as it is charged and discharged; in a relatively discharged state, the capacitance is reduced giving a relatively larger voltage based on the stored charge, and in a relatively charged state, the capacitance is increased giving a relatively smaller voltage based on the stored charge. This makes the output more easily processed for practical use.

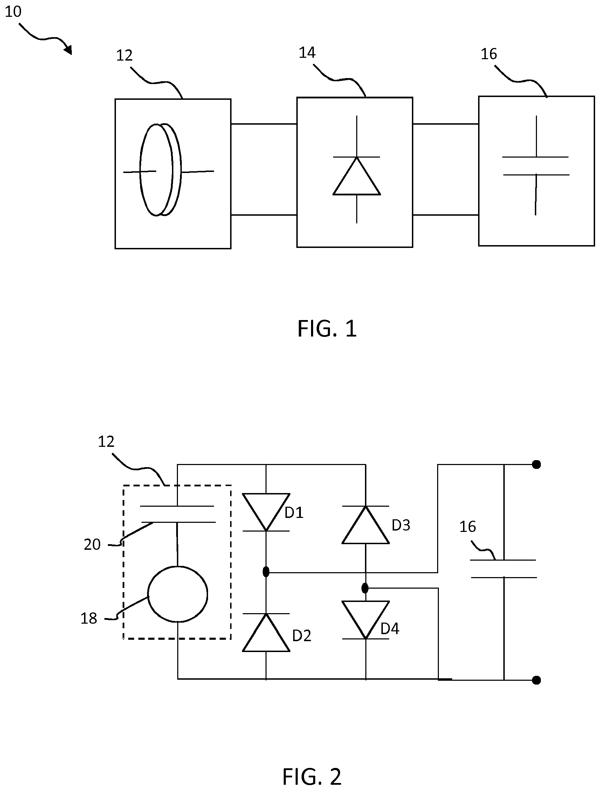

Figure 1 shows a device 10 for generating electrical power, in schematic form. It comprises an electrical power generator 12 configured to generate an electrical output current using charge induction. If the power generator generates a signal with both polarities (i.e. a current which flows in one direction at some times and in the opposite direction at other times), a rectifier 14 is used to provide a rectified output.

A load capacitor 16 is provided for storing charge in response to the (rectified) electrical output current. The load capacitor has a capacitance which increases with voltage.

Determining an optimal output capacitor for storing the generated current and also delivering energy to a load requires a compromise. If the load capacitor is high compared to the internal impedance of the generator 12, a large part of the voltage drop of the generated voltages during charging will be within the generator, which means there are power losses. On the other hand, if the load capacitor is low compared to the internal impedance of the generator, the output voltage will rapidly increase towards the open circuit voltage of the generator, and no current will flow towards the output and thus limit the total amount of energy transferred to the load capacitor.

Figure 2 shows the circuit elements of the device of Figure 1. The generator 12 comprises a charge induction system 18 with its own internal impedance, represented by capacitor 20.

The rectifier 14 is shown as a full bridge diode rectifier comprising diodes D1 to D4, and the load capacitor 16 is provided across the output terminals.

In a conventional system, the load capacitor is a capacitor with near constant capacitance as a function of voltage, and even with a slightly negative correlation between capacitance and voltage . The invention instead makes use of non-linear elements to form the capacitor 16, such as electrically responsive materials, and in particular for which the capacitance increases when the voltage increases, i.e. a strongly positive correlation. This enables the power transfer efficiency to be improved significantly during the charging process.

At initial charging, the voltage will rapidly increase, and as the voltage further increases, the capacitance increases resulting in almost a constant voltage. Furthermore, this property of such a responsive material capacitor will also be beneficial to limit the output voltage from reaching unpractical values.

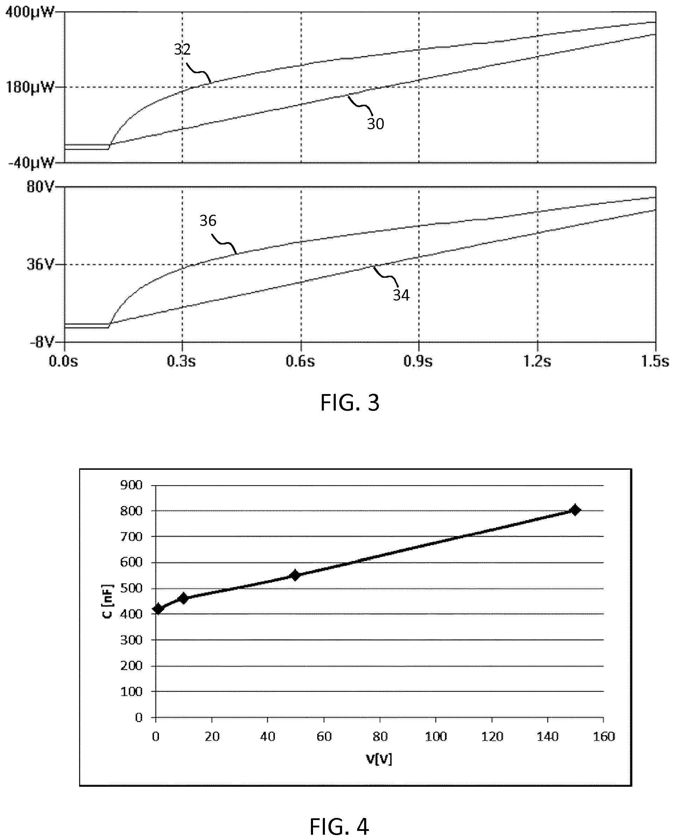

Figure 3 shows the result of a simulation model of a triboelectric generator which is delivering current to a conventional capacitor and then to responsive material capacitor.

The top plot shows the output power (the product of the output current and the voltage) over time, based on a constant charging current. The charging of a conventional capacitor is shown as plot 30 and the charging of a variable capacitor is shown as plot 32.

The bottom plot shows the output voltage over time, again based on the constant charging current. The charging of a conventional capacitor is shown as plot 34 and the charging of a variable capacitor is shown as plot 36.

The simulation results show the benefits of energy transfer by using non-linear responsive materials as the load capacitor for a triboelectric generator. While a conventional capacitor slightly decreases in capacitance as the Voltage increases (but by an almost negligible amount), the responsive material does the opposite: it increases capacitance significantly. As a result, the voltage across the responsive material capacitor increases exponentially and therefore much faster than the normal capacitor which has a linear slope during the charging phase. Initially, when the voltage across the capacitor is low, the output current of the generator is limited by the internal impedance of the generator.

As the voltage across the load capacitor increases, the output power (and energy transfer towards the output) of the generator increases. As the voltage across the responsive material capacitor increases faster than the voltage across the conventional capacitor, higher energy transfer towards the responsive material capacitor is achieved within a shorter period of time.

This advantage mainly applies to intermittent operation as in a self-powered switch where voltage across the load capacitor needs to be charged from near zero volts.

For continuous operation with continuous output power, the approach is less important since the load impedance needs to be matched to the generator internal impedance. However, even in continuous energy scavenging applications, if intermittent loads are applied, the advantage of using responsive materials as load capacitors is still beneficial. However, the approach is of most interest in applications where the load capacitor needs to be charged from near zero volts.

There are various options for the generator and for the variable capacitor. The capacitor will be discussed first.

Suitable materials include materials with increasing permittivity as a function of applied electric field. Such materials are known to include:
Certain electroactive polymer materials, such as polyvinylidene fluoride (PVDF) relaxor ferroelectrics (PVDF-TrFE-CTFE), wherein TrFE is trifluoroethylene and CTFE is chlorotrifluoro ethylene or anti-ferroelectric polymers such as certain imidazoles including:2-trifluoromethylbenzimidazole (TFMBI), 2-difluoromethylbenzimidazole (DFMBI) and 2-trichloromethylbenzimidazole (TCMBI);
Ceramics such as:
   Relaxor ferroelectric materials such as single crystal lead magnesium niobate-lead titanate (PMN-PT), and Pb(Zn(1/3)Nb(2/3))O(3-x)PbTiO(3) (PZN-PT) ceramics;
   Piezoelectric ceramics such as lead zirconate titanate (PZT), perovskite (PbZrO3) and lead free materials such as BNK-BT (a bismuth sodium titanate (Bi_{0.5}Na_{0.5}TiO₃, BNT) modified with potassium and barium) and (1 - x)(K0.5Na0.5)Nb03-xLiNb03 (KNN-LN);
   Anti-ferroelectric ceramics such as: Pb(Snₓ,Zr_{y},Ti_{z})O₃ and related ceramics including pure ceramics and ceramic-glass or ceramic-polymer composites. Further details are for example known from US 7 884 042.

Composites of polymer materials with dielectric or conducting materials and mixtures thereof.

By way of example, US 7 884 042 discloses a high energy density, antiferroelectric material, comprising:
a composition selected from the group consisting of:
Pb(Snx,Zry,Tiz)03 with x+y+z=100 mol % and x ranging from 0.1 to 80 mol %, y ranging from 0 to 99.9 mol %, and z ranging from 0 to 30 mol %; and
(Pb1-zMz)1-tRt(Sn,Zr,Ti)1-t/4O3 and
(Pb1-zMz)1-t(3/2)Rt(Sn,Zr,Ti)O3; and
C[(Pb1-zMz)1-tRt(Sn,Zr,Ti)1-t/4O3]+1-C[Pb1-zMz)1-t(3/2)Rt(Sn,Zr,Ti)O3]; with M being an ion with a 2+ valance from the group of elements containing Sr and Ba with z ranging from 0 to 20 mol % and the portions of Sn, Zr, and Ti varying over the ranges indicated in (1) above; with R being an ion with 3+ valance from the group of elements containing La, Ce, Pr, Nd, Pm, Sm, Eu, Gd, Tb, Dy, Ho, Er, Tm, Yb, or Lu; t ranging from 0 to 10 mol %; and C ranging from 0 to 1.

Figure 4 shows the capacitance-voltage characteristic for a multilayer stack formed from the electroactive polymer PVDF-TrFE-CTFE. The capacitance almost doubles at 150 V applied voltage compared to low voltage capacitance, based on a 10 second DC charging time and using discharge current integration measurement.

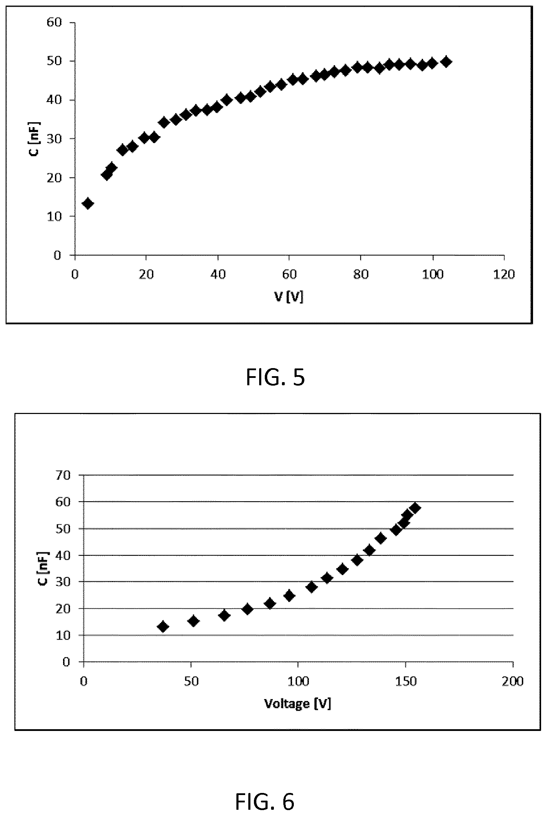

Figure 5 shows the capacitance-voltage characteristic for an example of a suitable ceramic capacitor of a PZT (Lead-Zirconium-Titanate) material which displays increasing permittivity with applied electric field. Reference is made to the article Wang et al., Piezoelectric and dielectric performance of poled lead zirconate titanate subjected to electric cyclic fatigue, Smart Mater. Struct. 21 (2012) 025009. Figure 5 shows the capacitance values for a 100 mm² parallel plate capacitor with 50 µm thickness (or corresponding multilayer stack configuration with similar area and layer thickness).

Figure 6 shows the capacitance-voltage characteristic for a suitable composite material as described in US2011/0140052.

The ternary composite material consists of an elastomer matrix filled with barium titanate and conducting carbon particles.

This material has a progressively increasing permittivity with applied electric field (measured at 100Hz). For instance, a parallel plate capacitor with 6400 mm² area and 150 µm thickness (or multilayer stack with equivalent area and layer thickness) made of the disclosed material has a capacitance of around 10 nF below 10V and above 50 nF at 150V.

There are other examples of possible material which may be used to produce the desired dependence of capacitance on the voltage.

As seen from some of the examples above, the capacitance of the load capacitor at the maximum output voltage may typically be in the range 50nF to 50µF and the maximum voltage is typically in the range 100 to 450V.

The required capacitance and operating voltages will strongly depend on the load of the application. For example: if a capacitor of 100nF is charged to 300V (and discharged down to 200V), this would enable supply of a 120mW load for 20 milliseconds. This is sufficient to send out a radio message.

The examples above make use of a material which provides a function between voltage and dielectric permittivity and therefore capacitance. Multiple capacitors of this type may be combined as part of a switched capacitor network. This enables further control of the range of capacitance induced over the operating range of the voltage. A lower capacitance may then be enabled for a low voltage and/or a higher capacitance may be enabled for a high voltage. Thus in claims 1-7 and claims 10-14 the term load capacitor is to be understood not to be limited to a single capacitor but can also be a multiple of capacitors wherein the term capacitance is thus also not limited to the capacitance of a single capacitor but can also be the resultance of the combination of capacitors.

Indeed, the desired increase in capacitance as a function of voltage may also be achieved using a switched capacitor network formed of conventional capacitors. This again may enable a larger capacitance range to be implemented, although it requires a control system for controlling the switches in the switched capacitor network in dependence on the voltage. Thus, the use of non-linear dielectric materials provides a simpler implementation without the need for a control system.

A compromise may be found between the complexity of the control and the closeness of the capacitance function to that which is desired. For example, a compromise may be an implementation with a small number of non-linear capacitors, such as only two, as the complexity of the switching control is then kept to a minimum while extending the tunability of the capacitance function.

The options for the electrical power generator will now be discussed.

A first general set of examples comprises triboelectric-based generator arrangements. Various different designs of triboelectric generator have been discussed in the introduction above, and each of these may be employed.

A particularly interesting first example is the rotating-disk triboelectric generator. The generator has a rotor and a stator. The rotor comprises a circumferential arrangement of triboelectric material surface portions, or triboelectric electrodes, to form a first set of generating elements. The stator has a co-operatively spaced arrangement of triboelectric material surface portions, or triboelectric electrodes, to form a second set of generating elements.

As discussed previously, a rotating disk TEG is a particular subset of linear sliding mode TEGs in which power is generated through the successive overlap and then separation of spaced circle sectors of triboelectrically active material formed on opposing surfaces of mutually rotating disk elements.

A charge may be induced between two laterally sliding - oppositely charged - layers, with a magnitude in proportion to the rate of change of the area of overlap. As each consecutively spaced sector of the rotor comes into and then out of overlap with a given stator sector, so a current is induced between the two sector plates, initially in a first direction, as the plates increase in overlap, and then in the opposite direction as the plates decrease in overlap. The result is an alternating current having a peak amplitude which is related, inter alia, to the surface area and material composition of the triboelectric surface portions, and having a frequency which is related, inter alia, to the relative speed of rotation between the disks and to the relative spacing or pitch of the pattern of triboelectric surface portions.

The power generation may instead be provided by an alternative variety of triboelectric generator arrangements. This might include for example a different type of linear sliding mode generator.

A particularly interesting second example is a device which operates with a vertical contact-separation mode, in which two or more plates are cyclically brought into or out of contact by an applied force.

A second general set of examples makes use of an induction generator or asynchronous generator. This is a known alternating current (AC) electrical generator that uses the principles of electromagnetic induction motors to produce power. Induction generators operate by mechanically turning their rotors faster than the synchronous speed. Induction generators are well known in applications where energy can be recovered with relatively simple controls.

Induction generators are often used in wind turbines and some micro hydro installations due to their ability to produce useful power at varying rotor speeds.

Electromagnetic induction generators are not suitable for very small power and low cost applications, and an alternative is electrostatic induction. This enables a simple structure and gives a high output voltage at relatively slow speeds. A promising area is the use of electrostatic induction with an electret, which is a dielectric material with a semi-permanent charge.

An electret based generator creates a flow of charge based on the position of the electret relative to associated work electrodes. The electret induces a counter charge on the work electrodes, and changes in the position of the electret with respect to work electrodes generates a movement of charge and hence an output current.

The circuit of Figure 2 shows only the basic circuit elements. For example, a reactive impedance may also be connected in series with the electrical power generator to improve further the charge transfer.

## Claims

1. A device for generating electrical power, comprising:
an electrical power generator (12) configured to generate an electrical output current using charge induction; and
a load capacitor (16) for storing charge in response to the electrical output current,
**characterized in that** the load capacitor (16) has a capacitance which increases with the voltage across the load capacitor (16).

2. A device as claimed in claim 1, wherein at the maximum output voltage of the electrical power generator (12), the capacitance of the load capacitor is at least 50% higher than at 10% of the maximum output voltage, more preferably at least double that at 10% of the maximum output voltage.

3. A device as claimed in claim 1 or 2, comprising a rectifier (14) for rectifying the electrical output current.

4. A device as claimed in any preceding claim, wherein the electrical power generator comprises (12) a first set of generating elements and a second set of generating elements, at least the first set of which is configured to hold an electrical charge, wherein the first and second sets are movable with respect to one another to generate the electrical output current.

5. A device as claimed in any preceding claim, wherein the electrical power generator (12) comprises a triboelectric generator.

6. A device as claimed in any one of claims 1 to 4, wherein the electrical power generator (12) comprises an induction generator or an electret generator.

7. A device as claimed in claim 5, wherein the electrical power generator is operable in a contact mode and a non-contact mode, with a cyclic operation between the contact and non-contact modes.

8. A device as claimed in any preceding claim, wherein the load capacitor (16) comprises a material having an increasing permittivity with increased applied electric field.

9. A device as claimed in claim 8, wherein the material comprises:
an electroactive polymer material; or
a relaxor ferroelectric material; or
a piezoelectric ceramic; or
a composite polymer material.

10. A method for generating electrical power, comprising:
generating an electrical output current using charge induction using an electrical power generator (12); and
storing charge in response to the electrical output current on a load capacitor (16),
**characterized in that** the load capacitor (16) has a capacitance which increases with the voltage across the load capacitor (16).

11. A method as claimed in claim 10, wherein at the maximum output voltage of the electrical power generator, the capacitance of the load capacitor is at least 50% higher than at 10% of the maximum output voltage, more preferably at least double that at 10% of the maximum output voltage.

12. A method as claimed in claim 10 or 11, comprising rectifying the electrical output current.

13. A method as claimed in any one of claims 10 to 12, wherein the electrical power generator (12) comprises a triboelectric generator, an induction generator or an electret generator.

14. A method as claimed in one of claims 10 to 13, comprising operating the electrical power generator in a contact mode and a non-contact mode, with a cyclic operation between the contact and non-contact modes.

15. A method as claimed in any one of claims 10 to 14, comprising storing change on a load capacitor which comprises a material having an increasing permittivity with increased applied electric field, wherein the material comprises:
an electroactive polymer material; or
a relaxor ferroelectric material; or
a piezoelectric ceramic; or
a composite polymer material.

## Patentansprüche

1. Vorrichtung zur Erzeugung von elektrischem Strom, umfassend:
einen Stromgenerator (12), der konfiguriert ist, um einen elektrischen Ausgangsstrom unter Verwendung von Ladungsinduktion zu erzeugen; und
einen Lastkondensator (16) zum Speichern von Ladung als Reaktion auf den elektrischen Ausgangsstrom,
**dadurch gekennzeichnet, dass** der Lastkondensator (16) eine Kapazität aufweist, die mit der Spannung am Lastkondensator (16) ansteigt.

2. Vorrichtung nach Anspruch 1, wobei bei der maximalen Ausgangsspannung des Stromgenerators (12) die Kapazität des Lastkondensators mindestens 50% höher ist als bei 10% der maximalen Ausgangsspannung, bevorzugter mindestens das Doppelte der bei 10% der maximalen Ausgangsspannung.

3. Vorrichtung nach Anspruch 1 oder 2, mit einem Gleichrichter (14) zum Gleichrichten des elektrischen Ausgangsstroms.

4. Vorrichtung nach einem der vorhergehenden Ansprüche, wobei der Stromgenerator (12) einen ersten Satz von Erzeugungselementen und einen zweiten Satz von Erzeugungselementen umfasst, von denen mindestens der erste Satz konfiguriert ist, um eine elektrische Ladung zu halten, wobei der erste und der zweite Satz relativ zueinander beweglich sind, um den elektrischen Ausgangsstrom zu erzeugen.

5. Vorrichtung nach einem der vorhergehenden Ansprüche, wobei der Stromgenerator (12) einen triboelektrischen Generator umfasst.

6. Vorrichtung nach einem der Ansprüche 1 bis 4, wobei der Stromgenerator (12) einen Induktionsgenerator oder einen Elektretgenerator umfasst.

7. Vorrichtung nach Anspruch 5, wobei der Stromgenerator in einem Kontaktmodus und einem Nichtkontaktmodus betreibbar ist, mit einem zyklischen Betrieb zwischen dem Kontaktmodus und dem Nichtkontaktmodus.

8. Vorrichtung nach einem der vorhergehenden Ansprüche, wobei der Lastkondensator (16) ein Material umfasst, das mit zunehmendem angelegtem elektrischem Feld eine zunehmende Permittivität aufweist.

9. Vorrichtung nach Anspruch 8, wobei das Material umfasst:
ein elektroaktives Polymermaterial; oder
ein ferroelektrisches Relaxormaterial; oder
eine piezoelektrische Keramik; oder
ein Verbundpolymermaterial.

10. Verfahren zum Erzeugen von elektrischem Strom, umfassend:
Erzeugen eines elektrischen Ausgangsstroms unter Verwendung einer Ladungsinduktion unter Verwendung eines elektrischen Stromgenerators (12); und
Speichern von Ladung als Reaktion auf den elektrischen Ausgangsstrom an einem Lastkondensator (16),
**dadurch gekennzeichnet, dass** der Lastkondensator (16) eine Kapazität aufweist, die mit der Spannung am Lastkondensator (16) ansteigt.

11. Verfahren nach Anspruch 10, wobei bei der maximalen Ausgangsspannung des Stromgenerators die Kapazität des Lastkondensators mindestens 50% höher ist als bei 10% der maximalen Ausgangsspannung, bevorzugter mindestens das Doppelte bei 10% der maximalen Ausgangsspannung.

12. Verfahren nach Anspruch 10 oder 11, umfassend das Gleichrichten des elektrischen Ausgangsstroms.

13. Verfahren nach einem der Ansprüche 10 bis 12, wobei der Stromgenerator (12) einen triboelektrischen Generator, einen Induktionsgenerator oder einen Elektretgenerator umfasst.

14. Verfahren nach einem der Ansprüche 10 bis 13, umfassend das Betreiben des Stromgenerators in einem Kontaktmodus und einem Nichtkontaktmodus mit einem zyklischen Betrieb zwischen dem Kontaktmodus und dem Nichtkontaktmodus.

15. Verfahren nach einem der Ansprüche 10 bis 14, umfassend das Speichern von Änderungen auf einem Lastkondensator, der ein Material umfasst, das mit zunehmendem angelegtem elektrischem Feld eine zunehmende Permittivität aufweist, wobei das Material umfasst:
ein elektroaktives Polymermaterial; oder
ein ferroelektrisches Relaxormaterial; oder
eine piezoelektrische Keramik; oder
ein Verbundpolymermaterial.

## Revendications

1. Dispositif de génération d'énergie électrique, comprenant:
un générateur d'énergie électrique (12) configuré pour générer un courant de sortie électrique en utilisant une induction de charge; et
un condensateur de charge (16) pour stocker une charge en réponse au courant de sortie électrique,
**caractérisé en ce que** le condensateur de charge (16) a une capacité qui augmente avec la tension à travers le condensateur de charge (16).

2. Dispositif selon la revendication 1, dans lequel à la tension de sortie maximale du générateur d'énergie électrique (12), la capacité du condensateur de charge est au moins 50% plus élevée qu'à 10% de la tension de sortie maximale, plus préférablement au moins le double de celle à 10% de la tension de sortie maximale.

3. Dispositif selon la revendication 1 ou 2, comprenant un redresseur (14) pour redresser le courant de sortie électrique.

4. Dispositif selon l'une quelconque des revendications précédentes, dans lequel le générateur d'énergie électrique comprend (12) un premier ensemble d'éléments générateurs et un second ensemble d'éléments générateurs, dont au moins le premier ensemble est configuré pour contenir une charge électrique, où les premier et second ensembles sont mobiles l'un par rapport à l'autre pour générer le courant de sortie électrique.

5. Dispositif selon l'une quelconque des revendications précédentes, dans lequel le générateur d'énergie électrique (12) comprend un générateur triboélectrique.

6. Dispositif selon l'une quelconque des revendications 1 à 4, dans lequel le générateur d'énergie électrique (12) comprend un générateur à induction ou un générateur à électret.

7. Dispositif selon la revendication 5, dans lequel le générateur d'énergie électrique peut fonctionner selon un mode avec contact et selon un mode sans contact, avec un fonctionnement cyclique entre les modes avec contact et sans contact.

8. Dispositif selon l'une quelconque des revendications précédentes, dans lequel le condensateur de charge (16) comprend un matériau ayant une permittivité croissante avec un champ électrique appliqué accru.

9. Dispositif selon la revendication 8, dans lequel le matériau comprend:
un matériau polymère électroactif; ou
un matériau ferroélectrique relaxeur; ou
une céramique piézoélectrique; ou
un matériau polymère composite.

10. Procédé de génération d'énergie électrique, consistant à:
générer un courant de sortie électrique à l'aide d'une induction de charge en utilisant un générateur d'énergie électrique (12); et
stocker une charge en réponse au courant de sortie électrique sur un condensateur de charge (16),
**caractérisé en ce que** le condensateur de charge (16) a une capacité qui augmente avec la tension à travers le condensateur de charge (16).

11. Procédé selon la revendication 10, dans lequel à la tension de sortie maximale du générateur d'énergie électrique, la capacité du condensateur de charge est au moins 50% supérieure à 10% de la tension de sortie maximale, plus préférentiellement au moins le double de celle à 10% de la tension de sortie maximale.

12. Procédé selon la revendication 10 ou 11, comprenant le redressement du courant de sortie électrique.

13. Procédé selon l'une quelconque des revendications 10 à 12, dans lequel le générateur d'énergie électrique (12) comprend un générateur triboélectrique, un générateur à induction ou un générateur à électret.

14. Procédé selon l'une des revendications 10 à 13, comprenant le fonctionnement du générateur d'énergie électrique selon un mode avec contact et selon un mode sans contact, avec un fonctionnement cyclique entre les modes avec contact et sans contact.

15. Procédé selon l'une quelconque des revendications 10 à 14, consistant à stocker un changement sur un condensateur de charge qui comprend un matériau ayant une permittivité croissante avec un champ électrique appliqué accru, où le matériau comprend:
un matériau polymère électroactif; ou
un matériau ferroélectrique relaxeur; ou
une céramique piézoélectrique; ou
un matériau polymère composite.
